# EUROPEAN PATENT SPECIFICATION

(11) **EP 2 773 097 B1**
(45) Date of publication and mention of the grant of the patent: **06.11.2019**
(21) Application number: 14156816.2
(22) Date of filing: 26.02.2014
(51) Int. Cl.: H04N 1/32

(54) **Image forming apparatus, image forming method, program, and storage medium**
Bilderzeugungsvorrichtung, Bilderzeugungsverfahren und Speichermedium
Appareil de formation d'images, procédé de formation d'images et support de stockage

(30) Priority: 28.02.2013 JP 2013038224
(43) Date of publication of application: 03.09.2014
(73) Proprietor: Kyocera Document Solutions Inc., Osaka-shi, Osaka 540-8585 (JP)
(72) Inventor: Kuroda, Koji, Osaka-shi, Osaka 540-8585 (JP)
(74) Representative: Plougmann Vingtoft a/s

(56) References cited:
- JP-A- 2008 085 489
- US-A1- 2010 166 316
- US-A1- 2011 058 028

## Description

### BACKGROUND

The present disclosure relates to an image forming apparatus and an image forming method for forming an image.

Conventionally, for example, in a color printer, in the case of printing image data of a photograph which is taken with a digital camera and includes a person image, etc., in order to perform reprinting etc., a predetermined number of prints are made once, then a user counts a required number of people while viewing these printed matter, and decides a number of prints.

However, in such a conventional method in which the user counts the number of people, in the case of printing a plurality of photographs etc., the user needs to decide a number of prints for each photograph, an operation of counting the number of people for each photograph is involved, and thus the operation by the user is very cumbersome.

In order to solve such a problem, for example, there is a technology of a printer-integrated camera in which it is possible to automatically detect people from image data obtained by a photographing portion which photographs a subject and to make a number of prints which is equal to the number of the detected people. The printer-integrated camera includes: the photographing portion which photographs a subject; a detection portion which detects the number of people in an inputted image on the basis of an output signal of the photographing portion; and a print number control portion which operates in response to output of the detection portion.

However, in the printer-integrated camera, it is possible to automatically output the number of prints which is equal to the number of people detected by the detection portion, but in the case where it is necessary to make, for each photograph, a desired number of prints which is different from the number of automatically-detected people, for example, in the case of making a number of prints which is equal to the number of specific people of photographed people, not making a number of prints which is equal to the number of all the detected people, it is impossible to make the desired number of prints, which is inconvenient.

For such a problem, an image forming apparatus is known which includes: an image reading portion which inputs an image; and a person recognition portion which calculates characteristic amounts for recognizing a person included in the image inputted from the image reading portion and recognizes the person on the basis of the characteristic amounts. The image forming apparatus includes: a control portion which performs mutual comparison of a specific characteristic amount of the characteristic amounts calculated by the person recognition portion, determines whether a difference amount of the characteristic amount is equal to or less than a predetermined threshold, separates recognized people into groups on the basis of a result of the determination, and determines the number of the people in a desired group; and a printing control portion which performs control so as to make a number of prints which is equal to the number of the people determined by the control portion. Thus, it is possible to identify the number of people included in image data, to automatically determine a required and desired number of people from the identified number of the people, and to perform printing, and it is also possible to provide reduction of an input/setting operation and better convenience to the user.

Moreover, a printing device is known which prints image data inputted by an input portion. The printing device includes: a storage portion which stores, as registration person information, information regarding registration people which are previously registered; a setting portion which determines, on the basis of the registration person information stored in the storage portion, whether image data including person images of the registration people is included in the image data inputted by the input portion, and sets all image data including the person images as printing image data when such image data is included; and a printing portion which prints the image data which is set as the printing image data by the setting portion. Thus, without the user making final confirmation for deciding a number of prints, it is possible to make a required number of prints of the image data which is a printing target.

US 2010 166316 A1 discloses a digital image processing apparatus and method that may detect faces from an input image, obtain face number information indicating a number of faces detected, and generate an image file including the input image together and the face number information. A number of copies of the image file to print may be automatically determined based on the face number information. A plurality of image files may also be arranged according to their respective number of detected faces.

### SUMMARY

An image forming apparatus according to one aspect of the present disclosure is disclosed in claim 1.

An image forming method according to another aspect of the present disclosure is disclosed in claim 7.

A program according to another aspect of the present disclosure is disclosed in claim 8.

A storage medium according to another aspect of the present disclosure is disclosed in claim 9.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a conceptual diagram showing the overall configuration of the inside of a multifunction peripheral according to an embodiment of the present disclosure.
FIG. 2 is a conceptual diagram showing the overall configuration of an operation portion according to the embodiment of the present disclosure.
FIG. 3 is a diagram showing the configuration of control system hardware of the multifunction peripheral according to the embodiment of the present disclosure.
FIG. 4 is a functional block diagram showing the multifunction peripheral according to the embodiment of the present disclosure.
FIG. 5 is a flowchart showing an execution procedure according to the embodiment of the present disclosure.
FIG. 6A is a diagram showing an example of a photographic image acquisition screen displayed on a touch panel according to the embodiment of the present disclosure.
FIG. 6B is a diagram showing an example of a face detection screen displayed on the touch panel according to the embodiment of the present disclosure.
FIG. 7A is a diagram showing an example of a method for associating the number of face images as a number of prints with each photographic image, according to the embodiment of the present disclosure.
FIG. 7B is a diagram showing an example of a photographer number addition screen displayed on the touch panel according to the embodiment of the present disclosure.
FIG. 8A is a diagram showing an example of a maximum print number setting screen displayed on the touch panel according to the embodiment of the present disclosure.
FIG. 8B is a diagram showing an example of a print setting change screen displayed on the touch panel according to the embodiment of the present disclosure.

### DETAILED DESCRIPTION

### <Image forming apparatus>

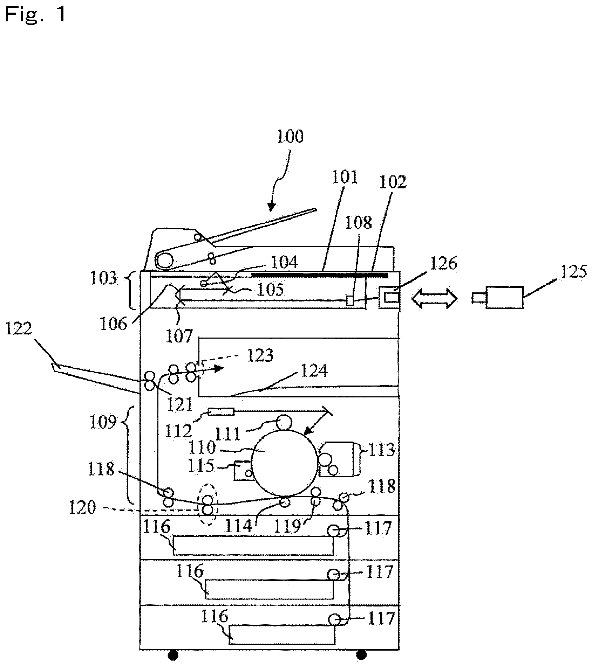

Hereinafter, an image forming apparatus according to an embodiment of the present disclosure will be described. FIG. 1 is a schematic diagram of the image forming apparatus according to the embodiment of the present disclosure. However, the details of each portion which is not directly related to the present disclosure are omitted.

It is noted that, for example, the image forming apparatus according to the present disclosure corresponds to a printer, a scanner, or a multifunction peripheral which includes a printer, a copier, a scanner, a facsimile, and the like, and functions as an image forming apparatus having a copy function, a scanner function, a facsimile function, a printer function, and the like.

Hereinafter, for example, an operation of a multifunction peripheral 100 (MFP) when a copy function is used will be briefly described.

First, when a user uses the multifunction peripheral 100, the user places a document sheet on a document sheet table 101 provided on the upper surface of a housing portion. Then, by using an operation portion 102 (an operation panel) provided near the document sheet table 101, the user inputs a setting condition regarding image formation through an operation screen of the operation portion 102. Then, when the user presses a start key provided in the operation portion 102, the multifunction peripheral 100 starts image formation (a printing process).

Next, in an image reading portion 103, light emitted from a light source 104 is reflected on the document sheet placed on the document sheet table 101. The reflected light is guided to an image sensor 108 by mirrors 105, 106, and 107. The guided light is photoelectrically converted by the image sensor 108, and image data corresponding to the document sheet is generated.

Here, the generated image data may be immediately used for image formation as described below, may be temporarily stored in a predetermined internal memory (a storage medium) by the scanner function, or may be transmitted to a predetermined terminal apparatus connected via a network in a communicable manner, by a network scanner function.

An image forming portion 109 is a portion which forms a toner image on the basis of the image data. The image forming portion 109 includes a photosensitive drum 110. The photosensitive drum 110 rotates in a predetermined direction at a constant speed. Around the photosensitive drum 110, a charging device 111, an exposure unit 112, a developing device 113, a transfer device 114, a cleaning unit 115, and the like are arranged in order from the upstream side of the rotational direction.

The charging device 111 uniformly charges the surface of the photosensitive drum 110. The exposure unit 112 irradiates the surface of the charged photosensitive drum 110 with laser on the basis of the image data to form an electrostatic latent image. The developing device 113 applies toner onto the formed electrostatic latent image to form a toner image. The formed toner image is transferred onto a recording medium (e.g., a paper or a sheet) by the transfer device 114. The cleaning unit 115 removes excess toner remaining on the surface of the photosensitive drum 110. This series of processes is performed by the rotation of the photosensitive drum 110.

The sheet is conveyed from a plurality of sheet feeding cassettes 116 provided in the multifunction peripheral 100. When conveyed, the sheet is pulled out of one of the sheet feeding cassettes 116 into a conveyance path by a pick-up roller 117. The sheet feeding cassettes 116 contain sheets of paper types different from one another and each feed a sheet on the basis of setting conditions regarding image formation.

The sheet pulled out into the conveyance path is fed to between the photosensitive drum 110 and the transfer device 114 by conveying rollers 118 or registration rollers 119. The toner image is transferred onto the fed sheet by the transfer device 114, and the sheet is conveyed to a fixing device 120.

When the sheet onto which the toner image has been transferred is passed through between a heating roller and a pressure roller provided in the fixing device 120, heat and pressure are applied to the toner image, thereby fixing a visible image on the sheet. The amount of heat of the heating roller is optimally set in accordance with the paper type, thereby appropriately performing the fixing. After the visible image has been fixed on the sheet and the image formation has ended, the sheet is guided to a path switching portion 121 by conveying rollers 118.

At the path switching portion 121, on the basis of a switching instruction by the multifunction peripheral 100, the sheet is guided to a sheet discharge tray 122 provided at a side surface of the housing portion, or is guided via a sheet discharge port 123 to an in-body tray 124 provided in a body of the housing portion. The sheet is placed and accommodated in the sheet discharge tray 122 or the in-body tray 124. By the above procedure, the housing portion of the multifunction peripheral 100 provides the user with the copy function.

Meanwhile, when the copy function is used, the user may mount a portable predetermined USB memory 125 (a storage medium) to a USB mounting portion 126 (a USB insertion port) of the multifunction peripheral 100, image data which is previously stored in the USB memory 125 may be transferred to the multifunction peripheral 100, and the multifunction peripheral 100 may form an image on the basis of the image data from the USB memory 125.

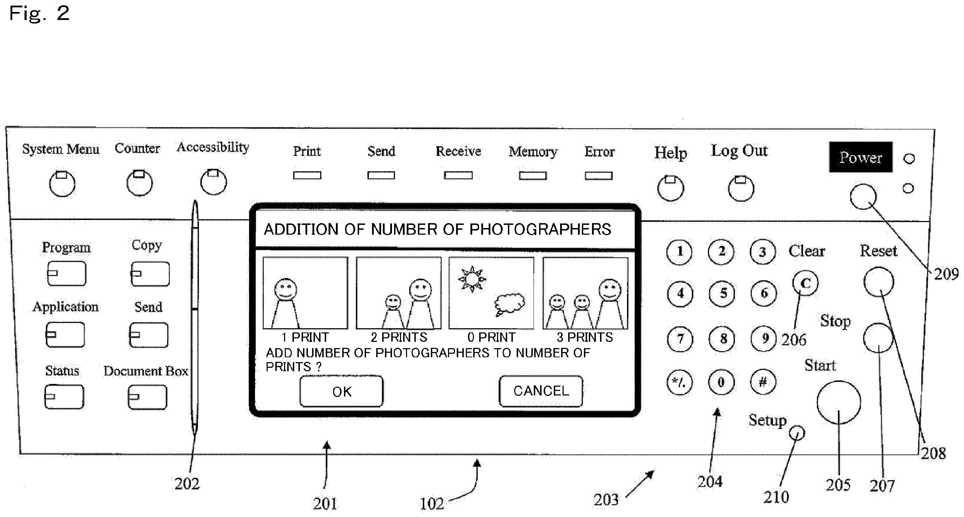

Next, FIG. 2 is a conceptual diagram showing the overall configuration of the operation portion according to the embodiment of the present disclosure. Using the operation portion 102, the user inputs a setting condition regarding image formation as described above and confirms the inputted setting condition. To input the setting condition, a touch panel 201 (an operation panel), a touch pen 202, and operation keys 203 provided in the operation portion 102 are used.

The touch panel 201 has a function of inputting setting conditions and a function of displaying the setting conditions. In other words, when a key in a screen displayed on the touch panel 201 is pressed, a setting condition corresponding to the pressed key is inputted.

A display portion (not shown) such as an LCD (Liquid Crystal Display) is provided on the back surface of the touch panel 201, and the display portion displays an operation screen such as the above initial screen. The touch pen 202 is provided near the touch panel 201. When the user brings the tip of the touch pen 202 into contact with the touch panel 201, a sensor provided under the touch panel 201 detects the location of the contact.

Furthermore, a predetermined number of operation keys 203 are provided near the touch panel 201, and include, for example, a numerical keypad 204, a start key 205, a clear key 206, a stop key 207, a reset key 208, and a power key 209.

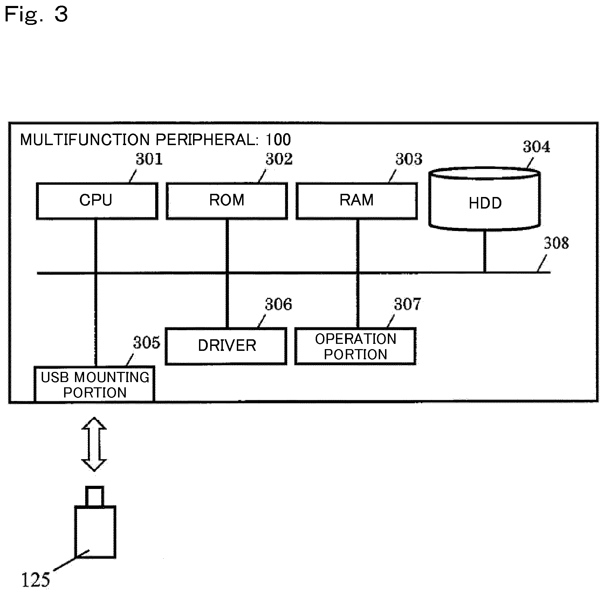

Next, the configuration of control system hardware of the multifunction peripheral 100 will be described with reference to FIG. 3. FIG. 3 is a diagram showing the configuration of the control system hardware of the multifunction peripheral 100 according to the embodiment of the present disclosure. However, the details of each portion which is not directly related to the present disclosure are omitted.

In a control circuit of the multifunction peripheral 100, a CPU (Central Processing Unit) 301, a ROM (Read Only Memory) 302, a RAM (Random Access Memory) 303, an HDD (Hard Disk Drive) 304, a USB mounting portion 305 (126), a driver 306 supporting each driving portion, an operation portion 307 (102) are connected to each other via an internal bus 308.

Using, for example, the RAM 303 as a work area, the CPU 301 executes a program stored in the ROM 302, the HDD 304, or the like, receives data or an instruction, a signal corresponding to a key, a command, or the like from the driver 306 and the operation portion 307 on the basis of the result of the execution, and controls operation of each driving portion shown in FIG. 1. In addition, when the USB memory 125 including a storage electronic circuit such as a flash memory or the like is mounted to the USB mounting portion 305, the CPU 301 reads given image data from the flash memory within the USB memory 125 and stores the image data into the ROM 302, the HDD 304, or the like.

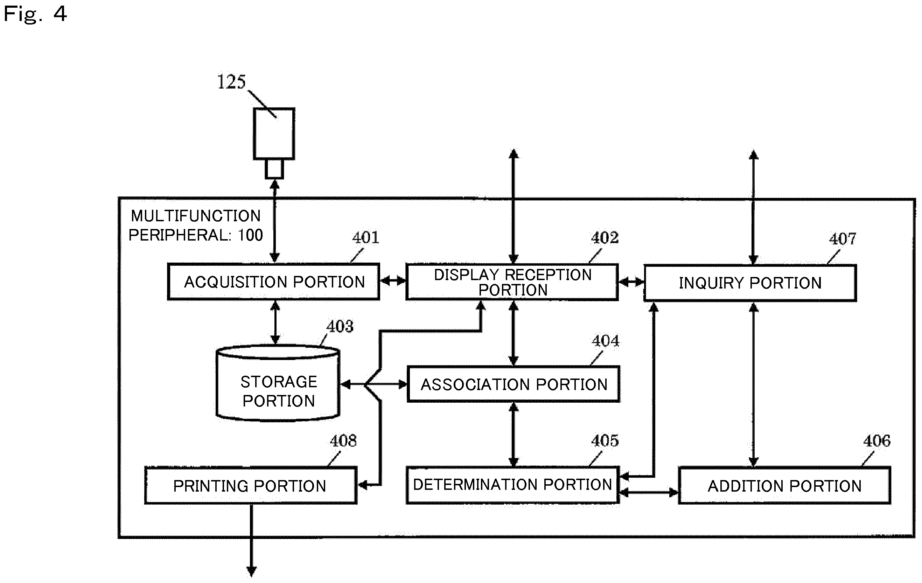

Furthermore, the CPU 301 executes a program, thereby achieving also each portion described later (shown in FIG. 4) other than the driving portions. The ROM 302, the HDD 304, or the like has stored therein a program and data for achieving each portion described later.

Meanwhile, in the conventional art, a number of prints is not set at the number of people for an image from which no person image (face image) has been recognized. Thus, before executing printing, the user sets the number of prints at the number of people for the image from which no person image has been recognized. Thus, the operation for the setting is cumbersome for the user, and it is inconvenient for the user.

Moreover, for an image from which a person image has been recognized, it is also conceivable to set the number of the recognized person images as a number of prints. However, in general, a required number of prints for an image from which a person image has been recognized is a number obtained by adding the number of photographers who photograph the image (e.g., one) to the number of the recognized person images. Thus, in such a technology, a number of prints that is equal to the number of the recognized person images is set automatically, but the number of photographers is not included, and thus the user needs to set an appropriate number of prints again.

Thus, in the multifunction peripheral 100 and an image forming method in the multifunction peripheral 100, a number of prints is automatically set for each of a plurality of photographic images, thereby improving user's convenience.

### <Embodiment of present disclosure>

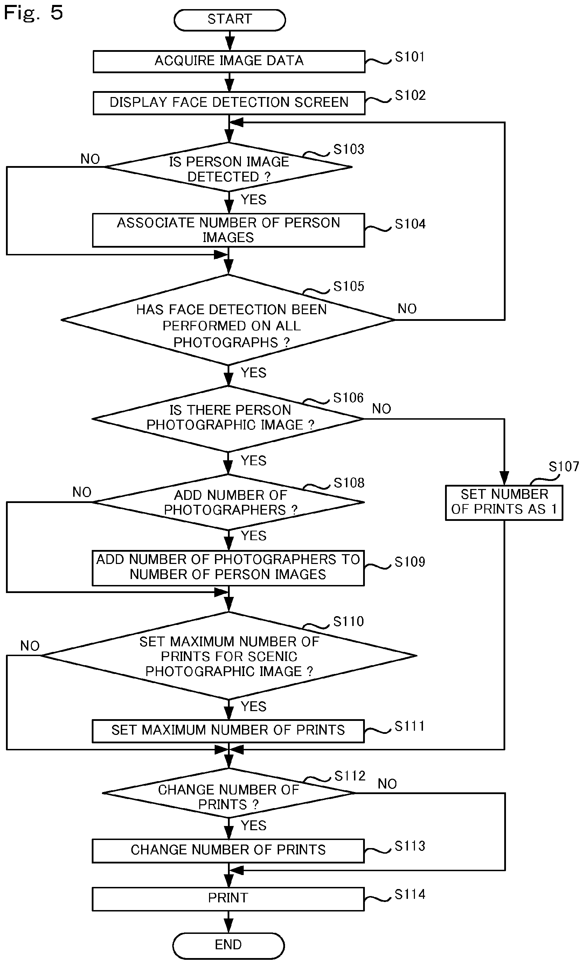

Next, a configuration and an execution procedure according to the embodiment of the present disclosure will be described with reference to FIGS. 4 and 5. FIG. 4 is a functional block diagram of the multifunction peripheral according to the embodiment of the present disclosure. In addition, FIG. 5 is a flowchart showing the execution procedure according to the embodiment of the present disclosure.

First, when the user powers on the multifunction peripheral 100 and mounts the own USB memory 125 to the USB mounting portion 126 of the multifunction peripheral 100, an acquisition portion 401 of the multifunction peripheral 100 detects the mounting of the USB memory 125 and determines whether there is data stored in the USB memory 125, such as photographic images taken with a digital camera or the like. As a result of the determination, when there are photographic images in the USB memory 125, the acquisition portion 401 notifies a display reception portion 402 of the presence of the photographic images, the display reception portion 402 which has received the notification displays a photographic image acquisition screen on the touch panel 201.

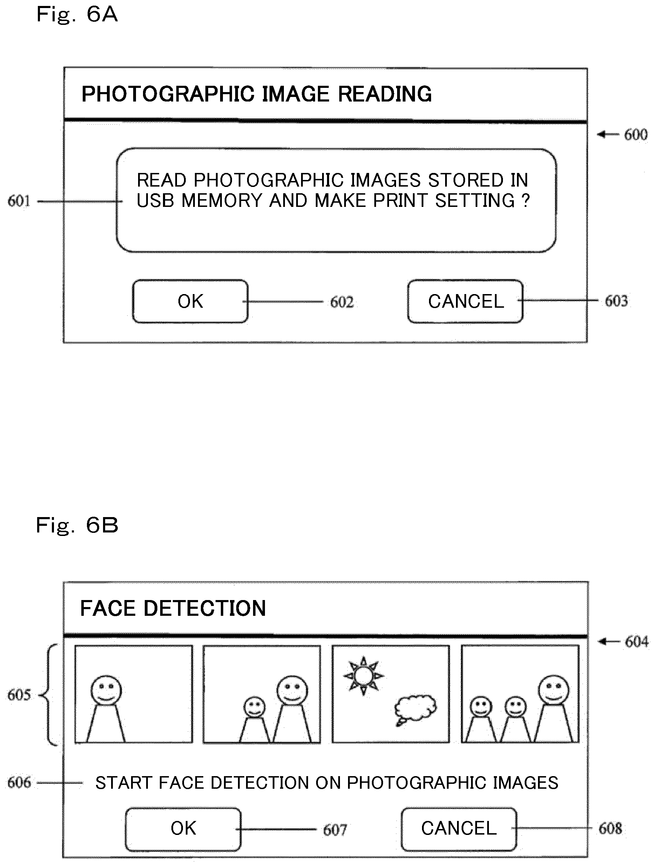

On the photographic image acquisition screen 600, as shown in FIG. 6A, a message 601 which inquires about whether to read the photographic images stored in the USB memory 125 and to shift to print setting, an OK key 602, and a cancel key 603 are displayed.

When the user presses the cancel key 603 while viewing the photographic image acquisition screen 600, the display reception portion 402 receives the pressing of the cancel key 603 and displays, for example, an ordinary initial screen regarding image formation.

Meanwhile, when the user presses the OK key 602, the display reception portion 402 receives the pressing of the OK key 602 and notifies the acquisition portion 401 of the pressing of the OK key 602. The acquisition portion 401 which has received the notification acquires the photographic images stored in the USB memory 125 (FIG. 5: S101). Here, in the embodiment of the present disclosure, the number of the photographic images stored in the USB memory 125 is, for example, 4.

When the acquisition portion 401 completes the acquisition of the four photographic images, the acquisition portion 401 stores the photographic images into a storage portion 403 and notifies the display reception portion 402 of the storing of the photographic images. The display reception portion 402 which has received the notification displays a face detection screen on the touch panel 201 (FIG. 5: S102).

On the face detection screen 604, as shown in FIG. 6B, thumbnail images 605 created on the basis of the photographic images, a message 606 which inquires about whether to perform person image detection (face detection and face recognition) on the photographic images, an OK key 607, and a cancel key 608 are displayed.

When the user presses the cancel key 608 while viewing the face detection screen 604, the display reception portion 402 receives the pressing of the cancel key 608, sets, for example, a preset number of prints (e.g., 1) for each of all the photographic images, and shifts to the ordinary initial screen. This is a conventional process.

Meanwhile, when the user presses the OK key 607, the display reception portion 402 receives the pressing of the OK key 607 and notifies an association portion 404 of the pressing of the OK key 607. In the case where a plurality of photographic images are read, the association portion 404 which has received the notification associates, with each photographic image, the number of person images (e.g., face images) included in the photographic image as a number of prints (FIG. 5: S103 to S105).

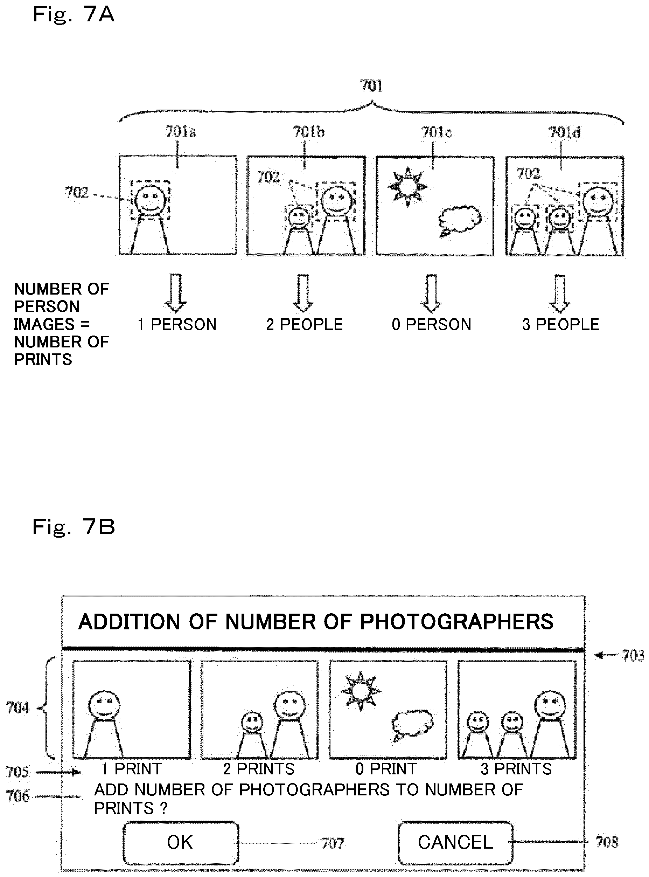

A method in which the association portion 404 associates, with each photographic image, the number of person images (face images) included in the photographic image as a number of prints may be any method. However, for example, as shown in FIG. 7A, the association portion 404 reads one photographic image from the storage portion 403 and detects a face image 702 of a person (or an image similar to this) in the one photographic image 701 by pattern recognition or the like (FIG. 5: S103). The detection method is, for example, a detection method in which it is determined whether the color of an image is a skin color or a similar color, the outline of the image has a round shape or a similar shape, or a face constituent image such as hair, eye, nose, mouth, ear, or the like is present. Known methods are used as these methods. Moreover, in the present disclosure, the person images are face images 702 but may be other images, and, for example, an entire person image representing the entirety of a person may be detected in one photographic image 701 by pattern recognition or the like.

As a result of the detection, when the association portion 404 detects the face image (person image) in the photographic image (FIG. 5: YES in S103), the association portion 404 determines the photographic image as a person photographic image including a person image, counts the number of the detected face images, and associates the counted number of the face images as a number of prints with the photographic image (FIG. 5: S104).

As shown in FIG. 7A, for example, when one face image 702 is detected in one photographic image 701a, the association portion 404 determines the photographic image 701a as the person photographic image, and associates the number of the face images 702 (1) as a number of prints with the photographic image 701a.

On the other hand, as the result of the detection, when the association portion 404 detects no face image in the photographic image (FIG. 5: NO in S103), the association portion 404 determines the photographic image as a scenic photographic image including no person image, and does not perform association as a number of prints. In other words, 0 is set as a number of prints for the scenic photographic image.

As shown in FIG. 7A, for example, when no face image 702 is detected in one photographic image 701c, the association portion 404 determines the photographic image 701c as the scenic photographic image, and 0 is set as a number of prints.

Then, when the association portion 404 ends the execution of the face image detection on the one photographic image 701, the association portion 404 determines whether the face image detection has been executed on all the photographic images 701 (FIG. 5: S105). When the face image detection has not been executed on all the photographic images 701 (FIG. 5: NO in S105), the processing proceeds to S103, and the association portion 404 reads one photographic image from the storage portion 403 again and detects a face image 702 in the one photographic image 701 (FIG. 5: S103). On the other hand, when the face image detection has been executed on all the photographic images 701 (FIG. 5: YES in S105), the association portion 404 ends all the processes. Thus, it is made possible to automatically associate a number of prints corresponding to the number of the person images with each photographic image 701.

When the association portion 404 associates the number of the person images (face images) as a number of prints with each photographic image, the association portion 404 notifies a determination portion 405 of the association, and the determination portion 405 which has received the notification determines whether, among the plurality of photographic images 701, there is a person photographic image including the person image (face image) (FIG. 5: S106).

As a result of the determination, when there is no person photographic image among the plurality of photographic images 701, for example, when each of the plurality of photographic images 701 is a scenic photographic image, there is no need to add the number of photographers to the number of prints, and thus the determination portion 405 determines that there is no person photographic image, and notifies an addition portion 406 of the absence of the person photographic image. The addition portion 406 which has received the notification sets 1 as a number of prints for each of the plurality of photographic images 701 (FIG. 5: S107). Thus, a number of prints for each of the scenic photographic images is automatically set as 1, and a user's operation for setting is omitted.

On the other hand, as the result of the determination, when there is a person photographic image among the plurality of photographic images 701, for example, when, among the four photographic images 701, the three photographic images 701a, 701b, and 701d are person photographic images and the one photographic image 701c is a scenic photographic image as shown in FIG. 7A, it is necessary to add the number of photographers to the number of prints, and thus the determination portion 405 determines that there are the person photographic images, and notifies an inquiry portion 407 of the presence of the person photographic images. The inquiry portion 407 which has received the notification inquires the user about whether to add the number of photographers to the number of prints associated with each photographic image 701 (FIG. 5: S108). Specifically, the inquiry portion 407 displays a photographer number addition screen on the touch panel 201.

On the photographer number addition screen 703, as shown in FIG. 7B, thumbnail images 704 corresponding to the photographic images 701, a number of prints 705 associated with each photographic image 701, a message 706 which inquires about whether to add the number of photographers to the number of prints, an OK key 707, and a cancel key 708 are displayed.

When the user presses the cancel key 708 while viewing the photographer number addition screen 703, the inquiry portion 407 receives the pressing of the cancel key 708 and notifies the addition portion 406 of the pressing of the cancel key 708. When the addition portion 406 which has received the notification receives from the user a reply that the number of photographers is not to be added to the number of prints (the pressing of the cancel key 708), the addition portion 406 sets the associated number of prints for each photographic image 701 without adding the number of photographers. Thus, for example, in the case of a photographic image 701 for which there is no need to add the number of photographers, e.g., a photographic image 701 photographed by, for example, a third person, it is possible to make a number of prints which is equal to the number of person images in the photographic image 701, without adding the number of photographers.

Meanwhile, when the user presses the OK key 707, the inquiry portion 407 receives the pressing of the OK key 707 and notifies the addition portion 406 of the pressing of the OK key 707. When the addition portion 406 which has received the notification receives from the user a reply that the number of photographers is to be added to the number of prints (the pressing of the OK key 707), the addition portion 406 sets an addition number obtained by adding the number of photographers to the number of prints for each photographic image 701, as a number of prints for each photographic image 701 (FIG. 5: S109). Here, the number of photographers is ordinarily 1, but may be set at a number of more than 1, such as at 2 or the like, in accordance with settings of the user such as an administrator.

For example, when the number of photographers is set at 1, the addition portion 406 adds 1 as the number of photographers to the number of prints for each photographic image 701, and sets the resultant addition number as a number of prints for each photographic image 701.

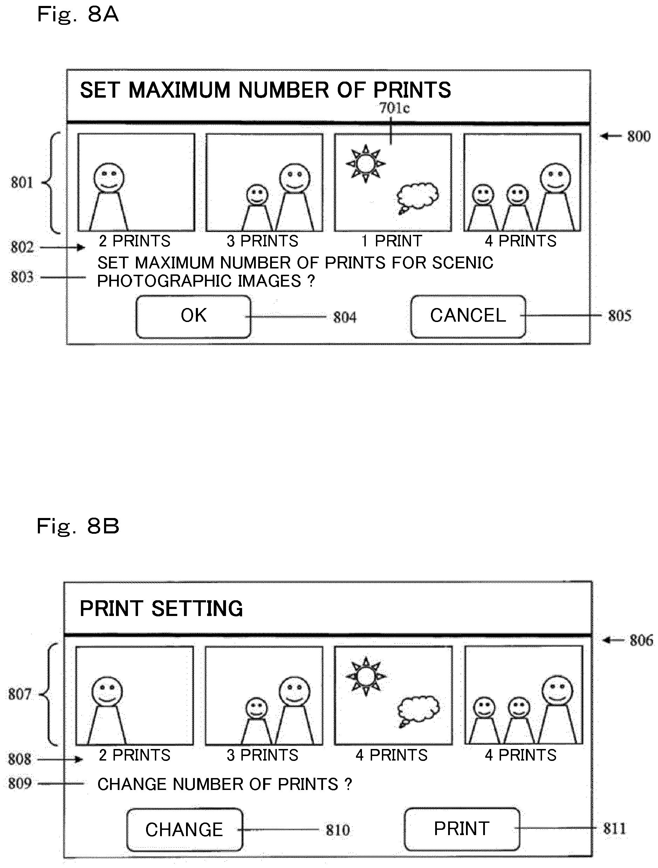

As shown in FIG. 8A, the number of prints for the first person photographic image 701a is 1 + 1 = 2; the number of prints for the second person photographic image 701b is 2 + 1 = 3; the number of prints for the third person photographic image 701d is 3 + 1 = 4; and the number of prints for the scenic photographic image 701c is 0 + 1 = 1. In other words, 1 is added to the number of prints for each photographic image 701.

Thus, whereas, in the conventional art, the user sets a number of prints by adding the number of photographers with a key operation; in the present disclosure, the addition number obtained by adding the number of photographers to the number of person images is automatically set as a number of prints, and thus it is made possible to greatly reduce a key operation of the user.

When the addition portion 406 completes the setting of the number of prints, the addition portion 406 notifies the inquiry portion 407 of the completion of the setting, and the inquiry portion 407 which has received the notification inquires the user about whether to set the maximum number of prints (4 in this example) of the numbers of prints which are set for the respective photographic images 701, for the scenic photographic image (FIG. 5: S110). Specifically, the inquiry portion 407 displays a maximum print number setting screen on the touch panel 201.

On the maximum print number setting screen 800, as shown in FIG. 8A, thumbnail images 801 corresponding to the photographic images 701, a number of prints 802 associated with each photographic image 701, a message 803 which inquires about whether to set the maximum number of prints for the scenic photographic image 701c of the photographic images 701, an OK key 804, and a cancel key 805 are displayed.

When the user presses the cancel key 805 while viewing the maximum print number setting screen 800 (FIG. 5: NO in S110), the inquiry portion 407 receives the pressing of the cancel key 805 and does not set the maximum number of prints for the scenic photographic image 701c. Thus, for example, when the scenic photographic image 701c is not intended to be distributed to all people related to the photographic images 701 but is a personal scenic photographic image, there is no need to make prints for all the people. In such a case, by pressing the cancel key 805, it is made possible to avoid unnecessary setting of a number of prints.

Meanwhile, when the user presses the OK key 804, the inquiry portion 407 receives the pressing of the OK key 804 (FIG. 5: YES in S110) and notifies the addition portion 406 of the pressing of the OK key 804. The addition portion 406 which has received the notification identifies the maximum number of prints (4) by mutually comparing the numbers of prints which are set for the respective photographic images 701, and sets the identified maximum number of prints for the scenic photographic image 701c (FIG. 5: S111). Thus, for example, when the scenic photographic image 701c is intended to be distributed to all the people related to the photographic images 701, it is necessary to make prints for all the people. In such a case, by pressing the OK key 804, a number of prints which is equal to the number of all the people is automatically set, and it is made possible to reduce a key operation of the user.

When the addition portion 406 (the inquiry portion 407) completes the process, the addition portion 406 (the inquiry portion 407) notifies the display reception portion 402 of the completion of the process, and the display reception portion 402 which has received the notification displays a print setting change screen on the touch panel 201 (FIG. 5: S112).

On the print setting change screen 806, as shown in FIG. 8B, thumbnail images 807 corresponding to the photographic images 701, a number of prints 808 associated with each photographic image 701, a message 809 which inquires about whether to change the number of prints for each photographic image 701, a change key 810, and a print key 811 are displayed.

When the user presses the change key 810 while viewing the print setting change screen 806 (FIG. 5: YES in S112), the display reception portion 402 receives the pressing of the change key 810, displays a predetermined print number change screen, and receives change of the number of prints for each photographic image 701 from the user (FIG. 5: S113). In this case, for example, the display reception portion 402 individually receives input of a number of prints for each photographic image 701 from the user, or receives input of a shared number of prints which is to be set for all the photographic images 701. Thus, it is made possible to make correction, change, or the like of the number of prints for each photographic image 701 according to an intention of the user.

In addition, in the case of the input of the shared number of prints, the shared number of prints which is to be set, may be calculated on the basis of a condition of printing, for example, whether the printing is monochrome printing or color printing. For example, on the basis of an amount of money (e.g., 500 yen) which is required for printing and is initially inserted (inputted) by the user, a monochrome unit amount of money (e.g., 10 yen) required for a single monochrome print, a color unit amount of money (e.g., 50 yen) required for a single color print, and the number of photographic images 701 (e.g., 4), a shared number of prints which is to be set for all the photographic images 701 may be calculated and set as 2 (an amount of money consumed for color printing is 400 yen) in the case of color printing, and a shared number of prints which is to be set for all the photographic images 701 may be calculated and set as 4 (an amount of money consumed for monochrome printing is 160 yen) which is the maximum number of prints, in the case of monochrome printing. Thus, for example, when the multifunction peripheral 100 is a pay image forming apparatus at a convenience store or the like, it is made possible to collectively set a number of prints which is a maximum printable number, in accordance with an amount of money inserted by the user.

It is noted that when change of the number of prints for each photographic image 701 is completed, the processing proceeds to later-described execution of image formation.

Meanwhile, when the user presses the print key 811 (FIG. 5: NO in S112), the display reception portion 402 receives the pressing of the print key 811 and notifies a printing portion 408 of the pressing of the print key 811. The printing portion 408 which has received the notification executes image formation for each photographic image 701 on the basis of the photographic image 701 stored in the storage portion 403 and the set number of prints (FIG. 5: S114). Thus, image formation is executed for each photographic image 701 as desired by the user, and the user is allowed to obtain the intended number of printed matter.

As described above, in the present disclosure, it is characterized to include: the association portion 404 which associates, with each photographic image 701, the number of face images 702 (person images) included in the photographic image 701 as a number of prints when a plurality of photographic images 701 are read; the determination portion 405 which determines whether, among the plurality of photographic images 701, there is a person photographic image including the face image 702; the inquiry portion 407 which inquires the user about whether to add the number of photographers to the number of prints associated with each photographic image 701, when there is the person photographic image; and the addition portion 406 which sets an addition number obtained by adding the number of photographers to the number of prints for each photographic image 701, as a number of prints for each photographic image 701 when receiving from the user a reply that the number of photographers is to be added to the number of prints.

Thus, since a number of prints including the number of photographers is automatically set for each photographic image 701, it is made possible to greatly reduce a key operation of the user and it is made possible to eliminate cumbersomeness of the user.

It is noted that in the embodiment of the present disclosure, the storage medium is the USB memory 125, but need not be limited to this, and may be, for example, a CD-ROM, an MO, an FD, an MD, an SD memory card, a memory stick, a CF, a MultiMediaCard (MMC) card, a SmartMedia card, or the like. In particular, the storage medium is preferably a storage medium which is portable to the user.

In addition, in the embodiment of the present disclosure, a plurality of photographic images stored in the storage medium are targeted, but the targets need not be limited to them, and, for example, a plurality of photographic images read by the multifunction peripheral 100 or a plurality of photographic images transmitted via a network may be targeted.

Moreover, in the embodiment of the present disclosure, the multifunction peripheral 100 is configured to include each portion, but a program which achieves each portion described above may be stored in a storage medium, and the storage medium may be provided. In this configuration, the multifunction peripheral 100 is caused to read the program to achieve each portion described above. In this case, the program itself read from the storage medium provides the advantageous effects of the present disclosure. Furthermore, the embodiment of the present disclosure can also be provided as a method of storing in a hard disk the steps to be executed by the respective portions.

As described above, the image forming apparatus and the image forming method according to the present disclosure are useful not only for the multifunction peripheral but also for a scanner, a copying machine, a printer, and the like, and are effective as an image forming apparatus and an image forming method which enable a number of prints for each of a plurality of photographic images to be appropriately and automatically set to improve user's convenience.

## Claims

1. An image forming apparatus (100) which recognizes a person image in a photographic image and sets the number of the recognized person images as a number of prints for the photographic image, the image forming apparatus (100) comprising:
an association portion (404) configured to, when a plurality of photographic images have been read, determine using face detection, for each of the plurality of photographic images, whether or not one or more person images are included in the photographic image, associate, as the number of prints, the number of person images included in the photographic image with the photographic image when the photographic image is a person photographic image that includes one or more person images, and associate zero as the number of prints, with the photographic image when the photographic image is a scenic photographic image that includes no person image;
a determination portion (405) configured to determine whether, among the plurality of photographic images, there is a person photographic image including one or more person images;
an inquiry portion (407) configured to inquire a user about whether to add the number of photographers to the number of prints associated with each photographic image, when there is a person photographic image; and
an addition portion (406) configured to set an addition number obtained by adding the number of photographers to the number of prints for each photographic image, as a number of prints for each photographic image when receiving from the user a reply that the number of photographers is to be added to the number of prints, **characterized in that**
when there is a person photographic image, the inquiry portion displays a photographer number addition screen on which are displayed thumbnail images corresponding to the photographic images, the number of prints associated with each photographic image, a message which inquires about whether to add the number of photographers to the number of prints, an OK key, and a cancel key, and inquires the user about whether to add the number of photographers to the number of prints associated with each photographic image,
when the OK key is selected on the photographer number addition screen, the addition portion sets the addition number obtained by adding the number of photographers to the number of prints for each photographic image, as a number of prints for each photographic image, and when the cancel key is selected on the photographer number addition screen, the addition portion sets the number of prints associated with each photographic image, and
when all of the plurality of photographic images are scenic photographic images, the addition portion sets one as the number of prints to each of the photographic images.

2. The image forming apparatus according to claim 1, wherein when the plurality of photographic images include one or more person photographic images and one or more scenic photographic images, the inquiry portion, after setting of the number of prints for each of the photographic images is completed, displays a maximum print number setting screen on which are displayed thumbnail images corresponding to the photographic images, the number of prints set for each of the photographic images, a message which inquires about whether to set the maximum number of prints to the scenic photographic images, an OK key, and a cancel key, and inquires the user about whether to set the maximum number of prints to the scenic photographic image, and
when the OK key is selected on the maximum print number setting screen, the addition portion sets the maximum number of prints, among the numbers of prints set for the photographic images, as the number of prints for each of the scenic photographic images, and when the cancel key is selected on the maximum print number setting screen, the addition portion sets the number of prints associated with each of the photographic images.

3. The image forming apparatus according to claim 1, wherein the association portion determines, for each of the plurality of photographic images, whether or not one or more person images are included, by performing, for each of the plurality of photographic images, detection of whether or not one or more face images are included.

4. The image forming apparatus according to claim 1 further comprising:
a display reception portion configured to, when a plurality of photographic images have been read, display a face detection screen on which are displayed thumbnail images corresponding to the photographic images, a message indicating that a face detection is to be started, an OK key, and a cancel key, and when the cancel key is selected, set a preset number of prints to each of all the photographic images, wherein
when the OK key is selected, the association portion determines, for each of all the photographic images, whether or not one or more person images are included.

5. The image forming apparatus according to claim 4, wherein the display reception portion, after setting of the number of prints for each of the photographic images is completed, displays a print setting change screen on which are displayed thumbnail images corresponding to the photographic images, the number of prints set for each of the photographic images, a message which inquires about whether to change the number of prints for each of the photographic images, a change key, and a print key, and when the change key is selected, individually receives input of a number of prints for each of the photographic images from the user, or receives input of a shared number of prints which is to be set for all the photographic images,
the image forming apparatus further comprising:
a printing portion configured to, when the print key is selected, execute image formation for each of the photographic images on the basis of the plurality of photographic images and the number of prints set for each of the photographic images.

6. The image forming apparatus according to claim 5, wherein the display reception portion, when the shared number of prints is input by the user, calculates the shared number of prints to be set, on the basis of an amount of money required for printing and initially input by the user, and a unit amount of money required for a single print.

7. An image forming method for an image forming apparatus (100), which recognizes a person image in a photographic image and sets the number of the recognized person images as a number of prints for the photographic image, the image forming method comprising:
an association step (S104) of, when a plurality of photographic images have been read, determining using face detection, for each of the plurality of photographic images, associating as the number of prints, the number of person images included in the photographic image with the photographic image when the photographic image is a person photographic image that includes one or more person images, and associating zero as the number of prints with the photographic image when the photographic image is a scenic photographic image that includes no person image;
a determination step (S106) of determining whether, among the plurality of photographic images, there is a person photographic image including one or more person images;
an inquiry step (S108) of inquiring a user about whether to add the number of photographers to the number of prints associated with each photographic image, when there is a person photographic image; and
an addition step (S109) of setting an addition number obtained by adding the number of photographers to the number of prints for each photographic image, as a number of prints for each photographic image when receiving from the user a reply that the number of photographers is to be added to the number of prints, **characterized in that**
when there is a person photographic image, the inquiring step displays a photographer number addition screen on which are displayed thumbnail images corresponding to the photographic images, the number of prints associated with each photographic image, a message which inquires about whether to add the number of photographers to the number of prints, an OK key, and a cancel key, and inquires the user about whether to add the number of photographers to the number of prints associated with each photographic image,
when the OK key is selected on the photographer number addition screen, the setting step sets the addition number obtained by adding the number of photographers to the number of prints for each photographic image, as a number of prints for each photographic image, and when the cancel key is selected on the photographer number addition screen, the setting step sets the number of prints associated with each photographic image, and
when all of the plurality of photographic images are scenic photographic images, the setting step (S107) sets one as the number of prints to each of the photographic images.

8. A program for causing an image forming apparatus, which recognizes a person image in a photographic image and sets the number of the recognized person images as a number of prints for the photographic image, to execute:
an association step (S104) of when a plurality of photographic images have been read, determining using face detection, for each of the plurality of photographic images, whether or not one or more person images are included in the photographic image, associating, as the number of prints, the number of person images included in the photographic image with the photographic image when the photographic image is a person photographic image that includes one or more person images, and associating zero as the number of prints with the photographic image when the photographic image is a scenic photographic image that includes no person image;
a determination step (S106) of determining whether, among the plurality of photographic images, there is a person photographic image including one or more person images;
an inquiry step (S108) of inquiring a user about whether to add the number of photographers to the number of prints associated with each photographic image, when there is a person photographic image; and
an additional step (S109) of setting an addition number obtained by adding the number of photographers to the number of prints for each photographic image, as a number of prints for each photographic image when receiving from the user a reply that the number of photographers is to be added to the number of prints, **characterized in that**
when there is a person photographic image, the inquiring step displays a photographer number addition screen on which are displayed thumbnail images corresponding to the photographic images, the number of prints associated with each photographic image, a message which inquires about whether to add the number of photographers to the number of prints, an OK key, and a cancel key, and inquires the user about whether to add the number of photographers to the number of prints associated with each photographic image,
when the OK key is selected on the photographer number addition screen, the setting step sets the addition number obtained by adding the number of photographers to the number of prints for each photographic image, as a number of prints for each photographic image, and when the cancel key is selected on the photographer number addition screen, the setting step sets the number of prints associated with each photographic image, and
when all of the plurality of photographic images are scenic photographic images, the setting step (S107) sets one as the number of prints to each of the photographic images.

9. A computer-readable storage medium having stored therein a program for causing an image forming apparatus, which recognizes a person image in a photographic image and sets the number of the recognized person images as a number of prints for the photographic image, to execute:
an association step (S104) of when a plurality of photographic images have been read, determining using face detection, for each of the plurality of photographic images, whether or not one or more person images are included in the photographic image, associating, as the number of prints, the number of person images included in the photographic image with the photographic image when the photographic image is a person photographic image that includes one or more person images, and associating zero as the number of prints with the photographic image when the photographic image is a scenic photographic image that includes no person image;
a determination step (S106) of determining whether, among the plurality of photographic images, there is a person photographic image including one or more person images;
an inquiry step (S108) of inquiring a user about whether to add the number of photographers to the number of prints associated with each photographic image, when there is a person photographic image; and
an addition step (S109) of setting an addition number obtained by adding the number of photographers to the number of prints for each photographic image, as a number of prints for each photographic image when receiving from the user a reply that the number of photographers is to be added to the number of prints, **characterized in that**
when there is a person photographic image, the inquiring step displays a photographer number addition screen on which are displayed thumbnail images corresponding to the photographic images, the number of prints associated with each photographic image, a message which inquires about whether to add the number of photographers to the number of prints, an OK key, and a cancel key, and inquires the user about whether to add the number of photographers to the number of prints associated with each photographic image,
when the OK key is selected on the photographer number addition screen, the setting step sets the addition number obtained by adding the number of photographers to the number of prints for each photographic image, as a number of prints for each photographic image, and when the cancel key is selected on the photographer number addition screen, the setting step sets the number of prints associated with each photographic image, and
when all of the plurality of photographic images are scenic photographic images, the setting step (S107) sets one as the number of prints to each of the photographic images.

## Patentansprüche

1. Bilderzeugungsvorrichtung (100), die ein Personenbild in einem fotografischen Bild erkennt und die Anzahl von erkannten Personenbildern als eine Anzahl von Abzügen für das fotografische Bild einstellt, wobei die Bilderzeugungsvorrichtung (100) Folgendes umfasst:
einen Assoziierungsabschnitt (404), der dazu konfiguriert ist, wenn eine Vielzahl von fotografischen Bildern gelesen wurde, unter Verwendung von Gesichtserkennung für jedes aus der Vielzahl von fotografischen Bildern zu bestimmen, ob ein oder mehrere Personenbilder in dem fotografischen Bild beinhaltet sind oder nicht, die Anzahl von Personenbildern, die in dem fotografischen Bild enthalten sind, wenn das fotografische Bild ein fotografisches Personenbild ist, das ein oder mehrere Personenbilder beinhaltet, für das fotografische Bild als die Anzahl von Abzügen zu assoziieren, und für das fotografische Bild Null als die Anzahl von Abzügen zu assoziieren, wenn das fotografische Bild ein fotografisches Landschaftsbild ist, das kein Personenbild beinhaltet;
einen Bestimmungsabschnitt (405), der dazu konfiguriert ist, zu bestimmen, ob die Vielzahl von fotografischen Bildern ein fotografisches Personenbild enthält, in dem ein oder mehrere Personenbilder beinhaltet sind;
einen Abfrageabschnitt (407), der dazu konfiguriert ist, einen Benutzer dahingehend abzufragen, ob die Anzahl von Fotografen zu der Anzahl von Abzügen, die mit jedem fotografischen Bild assoziiert ist, wenn ein fotografisches Personenbild vorhanden ist, hinzugefügt werden soll; und
einen Hinzufügungsabschnitt (406), der dazu konfiguriert ist, eine Hinzufügungsanzahl, die durch Hinzufügen der Anzahl von Fotografen zu der Anzahl von Abzügen für jedes fotografische Bild erlangt wird, als eine Anzahl von Abzügen für jedes fotografische Bild einzustellen, wenn von dem Benutzer eine Antwort erhalten wird, dass die Anzahl von Fotografen zu der Anzahl von Abzügen hinzugefügt werden soll, **dadurch gekennzeichnet, dass**
wenn ein fotografischen Personenbild vorhanden ist, der Abfrageabschnitt einen Fotografenanzahlhinzufügungsbildschirm anzeigt, auf dem Miniaturbilder entsprechend den fotografischen Bildern, die Anzahl von Abzügen, die mit jedem fotografischen Bild assoziiert sind, eine Nachricht, die abfragt, ob die Anzahl von Fotografen zu den Anzahl von Abzügen hinzugefügt werden soll, eine OK-Taste und eine Abbruchtaste angezeigt sind, und den Benutzer dahingehend abfragt, ob die Anzahl von Fotografen zu der Anzahl von Abzügen, die mit jedem fotografischen Bild assoziiert sind, hinzugefügt werden soll,
wenn die OK-Taste auf dem Fotografenanzahlhinzufügungsbildschirm ausgewählt wird, der Hinzufügungsabschnitt die Hinzufügungsanzahl, die durch Hinzufügen der Anzahl von Fotografen zu der Anzahl von Abzügen für jedes fotografische Bild erlangt wurde, als eine Anzahl von Abzügen für jedes fotografische Bild einstellt, und wenn die Abbruchtaste auf dem Fotografenanzahlhinzufügungsbildschirm ausgewählt wird, der Hinzufügungsabschnitt die Anzahl von Abzügen, die mit jedem fotografischen Bild assoziiert sind, einstellt, und
wenn alle aus der Vielzahl von fotografischen Bildern fotografische Landschaftsbilder sind, der Hinzufügungsabschnitt Eins als die Anzahl von Abzügen für jedes der fotografischen Bilder einstellt.

2. Bilderzeugungsvorrichtung nach Anspruch 1, wobei, wenn die Vielzahl von fotografischen Bildern ein oder mehrere fotografische Personenbilder und ein oder mehrere fotografische Landschaftsbilder beinhaltet, der Abfrageabschnitt, nachdem das Einstellen der Anzahl von Abzügen für der fotografischen Bilder abgeschlossen ist, einen Einstellbildschirm für die maximale Anzahl von Abzügen anzeigt, auf dem Miniaturbilder entsprechend den fotografischen Bildern, die eingestellte Anzahl von Abzügen für jedes der fotografischen Bilder, eine Nachricht, die abfragt, ob die maximale Anzahl von Abzügen für die fotografischen Landschaftsbilder eingestellt werden sollen, eine OK-Taste und eine Abbruchtaste angezeigt werden, und den Benutzer dahingehend abfragt, ob die maximale Anzahl von Abzügen für die fotografischen Landschaftsbilder eingestellt werden soll, und
wenn die OK-Taste auf dem Einstellungsbildschirm für die maximale Anzahl von Abzügen ausgewählt wird, der Hinzufügungsabschnitt die maximale Anzahl von Abzügen aus den Anzahlen von Abzügen, die für die fotografischen Bilder eingestellt sind, als die Anzahl von Abzügen für jedes der fotografischen Landschaftsbilder einstellt, und wenn die Abbruchtaste auf dem Einstellungsbildschirm für die maximale Anzahl von Abzügen ausgewählt wird, der Hinzufügungsabschnitt die Anzahl von Abzügen, die mit jedem von den fotografischen Bildern assoziiert sind, einstellt.

3. Bilderzeugungsvorrichtung nach Anspruch 1, wobei der Assoziierungsabschnitt für jedes aus der Vielzahl von fotografischen Bildern durch Durchführen, für jedes aus der Vielzahl von fotografischen Bildern, von Erkennung, ob ein oder mehrere Gesichtsbilder beinhaltet sind oder nicht, bestimmt, ob ein oder mehrere Personenbilder beinhaltet sind oder nicht.

4. Bilderzeugungsvorrichtung nach Anspruch 1 ferner umfassend:
einen Anzeigenempfangsabschnitt, der dazu konfiguriert ist, wenn eine Vielzahl fotografischen Bildern eingelesen wurde, einen Gesichtserkennungsbildschirm anzuzeigen, auf dem Miniaturbilder entsprechend fotografischen Bildern, eine Nachricht, die angibt, dass eine Gesichtserkennung gestartet werden soll, eine OK-Taste und eine Abbruchtaste angezeigt sind, und wenn die Abbruchtaste ausgewählt wird, eine voreingestellte Anzahl von Abzügen für jedes von allen der fotografischen Bilder einzustellen, wobei
wenn die OK-Taste ausgewählt ist, der Assoziierungsabschnitt für jedes von allen der fotografischen Bilder bestimmt, ob ein oder mehrere Personenbilder beinhaltet sind.

5. Bilderzeugungsvorrichtung nach Anspruch 4, wobei der Anzeigenempfangsabschnitt, nachdem das Einstellen der Anzahl von Abzügen für jedes der fotografischen Bilder abgeschlossen ist, einen Druckeinstellungsänderungsbildschirm anzeigt, auf dem Miniaturbilder entsprechend den fotografischen Bildern, die Anzahl von Abzügen, die für jedes der fotografischen Bilder eingestellt ist, eine Nachricht, die abfragt, ob die Anzahl von Abzügen für jedes der fotografischen Bilder geändert werden soll, eine Änderungstaste und eine Drucktaste angezeigt sind, und wenn die Änderungstaste ausgewählt wird, einzeln eine Eingabe einer Anzahl von Abzügen für jedes der fotografischen Bilder von dem Benutzer empfängt oder eine Eingabe einer gemeinsamen Anzahl von Abzügen, die für alle fotografischen Bilder eingestellt werden soll, empfängt,
wobei die Bilderzeugungsvorrichtung ferner Folgendes umfasst:
einen Druckabschnitt, der dazu konfiguriert ist, wenn die Drucktaste ausgewählt wird, Bilderzeugung für jedes der fotografischen Bilder auf der Grundlage der Vielzahl von fotografischen Bildern und der Anzahl von Abzügen, die für jedes der fotografischen Bilder eingestellt ist, auszuführen.

6. Bilderzeugungsvorrichtung nach Anspruch 5, wobei der Anzeigenempfangsabschnitt, wenn die gemeinsame Anzahl von Abzügen durch den Benutzer eingegeben ist, die einzustellende gemeinsame Anzahl von Abzügen auf der Grundlage einer Menge von Geld, die zum Drucken erforderlich ist und zu Anfang durch den Benutzer eingegeben wurde, und eine Einheitsmenge von Geld, die für einen einzelnen Abzug erforderlich ist, berechnet.

7. Bilderzeugungsverfahren für eine Bilderzeugungsvorrichtung (100), die ein Personenbild in einem fotografischen Bild erkennt und die Anzahl von erkannten Personenbildern als eine Anzahl von Abzügen für das fotografische Bild einstellt, wobei das Verfahren Folgendes umfasst:
einen Assoziierungsschritt (S104), wenn eine Vielzahl von fotografischen Bildern gelesen wurde, zum Bestimmen, unter Verwendung von Gesichtserkennung, für jedes aus der Vielzahl von fotografischen Bildern, Assoziieren der Anzahl von Personenbildern, die in dem fotografischen Bild enthalten sind, wenn das fotografische Bild ein fotografisches Personenbild ist, das ein oder mehrere Personenbilder beinhaltet, für das fotografische Bild als die Anzahl von Abzügen, und Assoziieren, für das fotografische Bild, von Null als die Anzahl von Abzügen, wenn das fotografische Bild ein fotografisches Landschaftsbild ist, das kein Personenbild beinhaltet;
einen Bestimmungsschritt (S106) zum Bestimmen, ob die Vielzahl von fotografischen Bildern ein fotografisches Personenbild enthält, in dem ein oder mehrere Personenbilder beinhaltet sind;
einen Abfrageschritt (S108) zum Abfragen eines Benutzers, ob die Anzahl von Fotografen zu der Anzahl von Abzügen, die mit jedem fotografischen Bild assoziiert ist, wenn ein fotografisches Personenbild vorhanden ist, hinzugefügt werden soll; und
einen Hinzufügungsschritt (S109) zum Einstellen einer Hinzufügungsanzahl, die durch Hinzufügen der Anzahl von Fotografen zu der Anzahl von Abzügen für jedes fotografische Bild erlangt wird, als eine Anzahl von Abzügen für jedes fotografische Bild, wenn von dem Benutzer eine Antwort erhalten wird, dass die Anzahl von Fotografen zu der Anzahl von Abzügen hinzugefügt werden soll, **dadurch gekennzeichnet, dass**
wenn ein fotografischen Personenbild vorhanden ist, der Abfrageschritt einen Fotografenanzahlhinzufügungsbildschirm anzeigt, auf dem Miniaturbilder entsprechend den fotografischen Bildern, die Anzahl von Abzügen, die mit jedem fotografischen Bild assoziiert sind, eine Nachricht, die abfragt, ob die Anzahl von Fotografen zu den Anzahl von Abzügen hinzugefügt werden soll, eine OK-Taste und eine Abbruchtaste angezeigt sind, und den Benutzer dahingehend abfragt, ob die Anzahl von Fotografen zu der Anzahl von Abzügen, die mit jedem fotografischen Bild assoziiert sind, hinzugefügt werden soll,
wenn die OK-Taste auf dem Fotografenanzahlhinzufügungsbildschirm ausgewählt wird, der Einstellungsschritt die Hinzufügungsanzahl, die durch Hinzufügen der Anzahl von Fotografen zu der Anzahl von Abzügen für jedes fotografische Bild erlangt wurde, als eine Anzahl von Abzügen für jedes fotografische Bild einstellt, und wenn die Abbruchtaste auf dem Fotografenanzahlhinzufügungsbildschirm ausgewählt wird, der Einstellungsschritt die Anzahl von Abzügen, die mit jedem fotografischen Bild assoziiert sind, einstellt, und
wenn alle aus der Vielzahl von fotografischen Bildern fotografische Landschaftsbilder sind, der Einstellungsschritt (S107) Eins als die Anzahl von Abzügen für jedes der fotografischen Bilder einstellt.

8. Programm zum Veranlassen einer Bilderzeugungsvorrichtung, die ein Personenbild in einem fotografischen Bild erkennt und die Anzahl von erkannten Personenbildern als eine Anzahl von Abzügen für das fotografische Bild einstellt, Folgendes auszuführen:
einen Assoziierungsschritt (S104) zum, wenn eine Vielzahl von fotografischen Bildern gelesen wurde, Bestimmen unter Verwendung von Gesichtserkennung für jedes aus der Vielzahl von fotografischen Bildern, ob ein oder mehrere Personenbilder in dem fotografischen Bild beinhaltet sind oder nicht, Assoziieren der Anzahl von Personenbildern, die in dem fotografischen Bild enthalten sind, wenn das fotografische Bild ein fotografisches Personenbild ist, das ein oder mehrere Personenbilder beinhaltet, für das fotografische Bild als die Anzahl von Abzügen, und Assoziieren, für das fotografische Bild, von Null als die Anzahl von Abzügen, wenn das fotografische Bild ein fotografisches Landschaftsbild ist, das kein Personenbild beinhaltet;
einen Bestimmungsschritt (S106) zum Bestimmen, ob die Vielzahl von fotografischen Bildern ein fotografisches Personenbild enthält, in dem ein oder mehrere Personenbilder beinhaltet sind;
einen Abfrageschritt (S108) zum Abfragen eines Benutzers, ob die Anzahl von Fotografen zu der Anzahl von Abzügen, die mit jedem fotografischen Bild assoziiert ist, wenn ein fotografisches Personenbild vorhanden ist, hinzugefügt werden soll; und
einen zusätzlichen Schritt (S109) zum Einstellen einer Hinzufügungsanzahl, die durch Hinzufügen der Anzahl von Fotografen zu der Anzahl von Abzügen für jedes fotografische Bild erlangt wird, als eine Anzahl von Abzügen für jedes fotografische Bild, wenn von dem Benutzer eine Antwort erhalten wird, dass die Anzahl von Fotografen zu der Anzahl von Abzügen hinzugefügt werden soll, **dadurch gekennzeichnet, dass**
wenn ein fotografischen Personenbild vorhanden ist, der Abfrageschritt einen Fotografenanzahlhinzufügungsbildschirm anzeigt, auf dem Miniaturbilder entsprechend den fotografischen Bildern, die Anzahl von Abzügen, die mit jedem fotografischen Bild assoziiert sind, eine Nachricht, die abfragt, ob die Anzahl von Fotografen zu den Anzahl von Abzügen hinzugefügt werden soll, eine OK-Taste und eine Abbruchtaste angezeigt sind, und den Benutzer dahingehend abfragt, ob die Anzahl von Fotografen zu der Anzahl von Abzügen, die mit jedem fotografischen Bild assoziiert sind, hinzugefügt werden soll,
wenn die OK-Taste auf dem Fotografenanzahlhinzufügungsbildschirm ausgewählt wird, der Einstellungsschritt die Hinzufügungsanzahl, die durch Hinzufügen der Anzahl von Fotografen zu der Anzahl von Abzügen für jedes fotografische Bild erlangt wurde, als eine Anzahl von Abzügen für jedes fotografische Bild einstellt, und wenn die Abbruchtaste auf dem Fotografenanzahlhinzufügungsbildschirm ausgewählt wird, der Einstellungsschritt die Anzahl von Abzügen, die mit jedem fotografischen Bild assoziiert sind, einstellt, und
wenn alle aus der Vielzahl von fotografischen Bildern fotografische Landschaftsbilder sind, der Einstellungsschritt (S107) Eins als die Anzahl von Abzügen für jedes der fotografischen Bilder einstellt.

9. Computerlesbares Speichermedium, auf dem ein Programm gespeichert ist zum Veranlassen einer Bilderzeugungsvorrichtung, die ein Personenbild in einem fotografischen Bild erkennt und die Anzahl von erkannten Personenbildern als eine Anzahl von Abzügen für das fotografische Bild einstellt, Folgendes auszuführen:
einen Assoziierungsschritt (S104) zum, wenn eine Vielzahl von fotografischen Bildern gelesen wurde, Bestimmen unter Verwendung von Gesichtserkennung für jedes aus der Vielzahl von fotografischen Bildern, ob ein oder mehrere Personenbilder in dem fotografischen Bild beinhaltet sind oder nicht, Assoziieren der Anzahl von Personenbildern, die in dem fotografischen Bild enthalten sind, wenn das fotografische Bild ein fotografisches Personenbild ist, das ein oder mehrere Personenbilder beinhaltet, für das fotografische Bild als die Anzahl von Abzügen, und Assoziieren, für das fotografische Bild, von Null als die Anzahl von Abzügen, wenn das fotografische Bild ein fotografisches Landschaftsbild ist, das kein Personenbild beinhaltet;
einen Bestimmungsschritt (S106) zum Bestimmen, ob die Vielzahl von fotografischen Bildern ein fotografisches Personenbild enthält, in dem ein oder mehrere Personenbilder beinhaltet sind;
einen Abfrageschritt (S108) zum Abfragen eines Benutzers, ob die Anzahl von Fotografen zu der Anzahl von Abzügen, die mit jedem fotografischen Bild assoziiert ist, wenn ein fotografisches Personenbild vorhanden ist, hinzugefügt werden soll; und
einen Hinzufügungsschritt (S109) zum Einstellen einer Hinzufügungsanzahl, die durch Hinzufügen der Anzahl von Fotografen zu der Anzahl von Abzügen für jedes fotografische Bild erlangt wird, als eine Anzahl von Abzügen für jedes fotografische Bild, wenn von dem Benutzer eine Antwort erhalten wird, dass die Anzahl von Fotografen zu der Anzahl von Abzügen hinzugefügt werden soll, **dadurch gekennzeichnet, dass**
wenn ein fotografischen Personenbild vorhanden ist, der Abfrageschritt einen Fotografenanzahlhinzufügungsbildschirm anzeigt, auf dem Miniaturbilder entsprechend den fotografischen Bildern, die Anzahl von Abzügen, die mit jedem fotografischen Bild assoziiert sind, eine Nachricht, die abfragt, ob die Anzahl von Fotografen zu den Anzahl von Abzügen hinzugefügt werden soll, eine OK-Taste und eine Abbruchtaste angezeigt sind, und den Benutzer dahingehend abfragt, ob die Anzahl von Fotografen zu der Anzahl von Abzügen, die mit jedem fotografischen Bild assoziiert sind, hinzugefügt werden soll,
wenn die OK-Taste auf dem Fotografenanzahlhinzufügungsbildschirm ausgewählt wird, der Einstellungsschritt die Hinzufügungsanzahl, die durch Hinzufügen der Anzahl von Fotografen zu der Anzahl von Abzügen für jedes fotografische Bild erlangt wurde, als eine Anzahl von Abzügen für jedes fotografische Bild einstellt, und wenn die Abbruchtaste auf dem Fotografenanzahlhinzufügungsbildschirm ausgewählt wird, der Einstellungsschritt die Anzahl von Abzügen, die mit jedem fotografischen Bild assoziiert sind, einstellt, und
wenn alle aus der Vielzahl von fotografischen Bildern fotografische Landschaftsbilder sind, der Einstellungsschritt (S107) Eins als die Anzahl von Abzügen für jedes der fotografischen Bilder einstellt.

## Revendications

1. Appareil de formation d'images (100) reconnaissant l'image d'une personne dans une image photographique, et établissant le nombre d'images de personnes reconnues en tant que nombre d'impressions pour l'image photographique, l'appareil de formation d'images (100) comprenant :
une partie d'association (404) configurée, lorsqu'une pluralité d'images photographiques a été lue, pour déterminer, en utilisant la détection faciale, pour chacune de la pluralité d'images photographiques, si une ou plusieurs personnes sont comprises, ou non, dans l'image photographique, associer, en tant que nombre d'impressions, le nombre d'images de personnes inclues dans l'image photographique à l'image photographique, lorsque l'image photographique est une image photographique de personnes, comprenant une ou plusieurs images de personnes, et associer zéro, en tant que nombre d'impressions, à l'image photographique, lorsque l'image photographique est une image photographique panoramique qui ne comprend aucune image de personnes ;
une partie de détermination (405) configurée pour déterminer si, parmi la pluralité d'images photographiques, il y a une image photographique de personnes comprenant une ou plusieurs images de personnes ;
une partie de demande (407) configurée pour demander à un utilisateur si l'on doit ajouter le nombre de photographes au nombre d'impressions associé à chaque image photographique, lorsqu'il y a une image photographique de personnes ; et
une partie d'adjonction (406) configurée pour établir un nombre d'adjonction obtenu en ajoutant le nombre de photographes au nombre d'impressions pour chaque image photographique, en tant que nombre d'impressions pour chaque image photographique, lors de la réception, de l'utilisateur, d'une réponse d'après laquelle le nombre de photographes doit être ajouté au nombre d'impressions,
**caractérisé en ce que**
lorsqu'il y a une image photographique de personnes, la partie de demande affiche un écran d'adjonction du nombre de photographes, sur lequel sont affichées des vignettes correspondant aux images photographiques, le nombre d'impressions associées à chaque image photographique, un message demandant si l'on souhaite ajouter le nombre de photographes au nombre d'impressions, une touche OK, et une touche d'annulation, et demande à l'utilisateur s'il souhaite ajouter le nombre de photographes au nombre d'impressions associé à chaque image photographique,
lorsque l'on sélectionne la touche OK sur l'écran d'adjonction du nombre de photographes, la partie d'adjonction définit le numéro d'adjonction obtenu en ajoutant le nombre de photographes au nombre d'impressions pour chaque image photographique, en tant que nombre d'impressions pour chaque image photographique, puis, lorsque l'on sélectionne la touche d'annulation sur l'écran d'adjonction du nombre de photographes, la partie d'adjonction établit le nombre d'impressions associé à chaque image photographique, et
lorsque toutes les images de la pluralité d'images photographiques sont des images photographiques panoramiques, la partie d'adjonction attribue « un » au nombre d'impressions relatif à chacune des images photographiques.

2. Appareil de formation d'images selon la revendication 1, dans lequel, lorsque la pluralité d'images photographiques comprend une ou plusieurs images photographiques de personnes et une ou plusieurs images photographiques panoramiques, la partie de demande affiche, après avoir effectué le réglage du nombre d'impressions relatif à chacune des images photographiques, un écran d'affichage du nombre maximum d'impressions sur lequel sont affichées des vignettes correspondant aux images photographiques, le nombre d'impressions établi pour chacune des images photographiques, un message demandant si l'on souhaite établir le nombre maximum d'impressions d'après les images photographiques panoramiques, une touche OK, et une touche d'annulation, et demandant à l'utilisateur s'il souhaite établir le nombre maximum d'impressions pour l'image photographique panoramique, et
lorsque la touche OK est sélectionnée sur l'écran d'affichage du nombre maximum d'impressions, la partie d'adjonction établit le nombre maximum d'impressions comme étant, parmi le nombre d'impressions établi pour les images photographiques, le nombre d'impressions pour chacune des images photographiques panoramiques, et lorsque l'on sélectionne la touche d'annulation sur l'écran d'affichage du nombre maximum d'impressions, la partie d'adjonction établit le nombre d'impressions associé à chacune des images photographiques.

3. Appareil de formation d'images selon la revendication 1, dans lequel la partie d'association détermine, pour chacune de la pluralité d'images photographiques, si une ou plusieurs images de personnes sont inclues, ou non, en procédant, pour chacune de la pluralité d'images photographiques, à la détection de l'inclusion, ou non, d'une ou plusieurs images faciales.

4. Appareil de formation d'images selon la revendication 1, comprenant en outre :
une partie de réception de l'affichage configurée pour afficher, lorsqu'une pluralité d'images photographiques a été lue, un écran de détection faciale sur lequel sont affichées des vignettes correspondant aux images photographiques, un message indiquant qu'une détection faciale doit être lancée, une touche OK, et une touche d'annulation, et lorsque l'on sélectionne la touche d'annulation, pour établir un nombre d'impressions prédéterminé pour chacune de l'intégralité des images photographiques, dans laquelle
lorsque l'on sélectionne la touche OK, la partie d'association détermine, pour chacune de l'ensemble des images photographiques, si une ou plusieurs images de personnes sont inclues ou non.

5. Appareil de formation d'images selon la revendication 4, la partie de réception de l'affichage affichant, lorsque le réglage du nombre d'impressions pour chacune des images photographiques a été effectué, un écran de modification de paramètres d'impression, sur lequel sont affichées des vignettes correspondant aux images photographiques, le nombre d'impressions établi pour chacune des images photographiques, un message demandant si l'on souhaite modifier le nombre d'impressions pour chacune des images photographiques, une touche de modification, une touche d'impression, et, lorsque la touche de modification est sélectionnée, recevant individuellement, de l'utilisateur, une entrée relative au nombre d'impressions pour chacune des images photographiques, ou recevant une entrée du nombre d'impressions commun devant être établi pour toutes les images photographiques,
l'appareil de formation d'images comprenant en outre :
une partie d'impression configurée pour opérer, lorsque l'on a sélectionné la touche d'impression, l'exécution d'une formation d'image pour chacune des images photographiques sur la base de la pluralité d'images photographiques et du nombre d'impressions pour chacune des images photographiques.

6. Appareil de formation d'images selon la revendication 5, la partie de réception de l'affichage calculant, lors de l'entrée du nombre d'impressions commun par l'utilisateur, le nombre d'impressions commun devant être réglé, en fonction de la somme d'argent requise pour l'impression, et entrée initialement par l'utilisateur, ainsi que la somme d'argent requise pour une impression unique.

7. Méthode de formation d'images pour un appareil de formation d'images (100) reconnaissant une image d'une personne dans une image photographique, et établissant le nombre d'images de personnes reconnues en tant que nombre d'impressions pour l'image photographique, la méthode de formation d'images comprenant :
une étape d'association (S104) comportant, après la lecture d'une pluralité d'images photographiques, la détermination, à l'aide de la détection faciale, de l'association, en tant que nombre d'impressions, du nombre d'images de personnes inclues dans l'image photographique à l'image photographique, lorsque l'image photographique est une image photographique de personnes comprenant une ou plusieurs images de personnes, et associant zéro, en tant que nombre d'impressions, à l'image photographique, lorsque l'image photographique est une image photographique panoramique ne comprenant aucune image de personnes ;
une étape de détermination (S106) permettant de déterminer si, parmi la pluralité d'images photographiques, il existe une image photographique de personnes comprenant une ou plusieurs images de personnes ;
une étape de demande (S108) permettant de demander à un utilisateur si le nombre de photographes doit être ajouté au nombre d'impressions associé à chaque image photographique, lorsqu'il existe une image photographique de personnes ; et
une étape d'adjonction (S109) permettant d'établir un nombre d'adjonction obtenu en ajoutant le nombre de photographes au nombre d'impressions pour chaque image photographique, en tant que nombre d'impressions pour chaque image photographique, lors de la réception, de l'utilisateur, d'une réponse d'après laquelle le nombre de photographes doit être ajouté au nombre d'impressions **caractérisé en ce que**
lorsqu'il y a une image photographique de personnes, l'étape de demande affiche un écran d'adjonction du nombre de photographes, sur lequel sont affichées des vignettes correspondant aux images photographiques, le nombre d'impressions associé à chaque image photographique, un message demandant si l'on souhaite ajouter le nombre de photographes au nombre d'impressions, une touche OK, et une touche d'annulation, et demande à l'utilisateur s'il souhaite ajouter le nombre de photographes au nombre d'impressions associé à chaque image photographique,
lorsque l'on sélectionne la touche OK sur l'écran d'adjonction du nombre de photographes, l'étape de réglage définit le nombre d'adjonction obtenu en ajoutant le nombre de photographes au nombre d'impressions relatif à chaque image photographique, en tant que nombre d'impressions pour chaque image photographique, et, lorsque l'on sélectionne la touche d'annulation sur l'écran d'adjonction du nombre du photographes, l'étape de réglage établit le nombre d'impressions associé à chaque image photographique, et
lorsque toutes les images de la pluralité d'images photographiques sont des images photographiques panoramiques, l'étape de réglage (S107) attribue « un » au nombre d'impressions relatif à chacune des images photographiques.

8. Programme permettant l'exécution, par un appareil de formation d'images reconnaissant l'image d'une personne dans une image photographique et établissant le nombre d'images de personnes reconnues en tant que nombre d'impressions pour l'image photographique,
d'une étape d'association (S104) comportant, après la lecture d'une pluralité d'images photographiques, la détermination, à l'aide de la détection faciale, pour chacune de la pluralité d'images photographiques, de l'inclusion, ou non, d'une ou plusieurs images de personnes dans l'image photographique, l'association, aux fins du nombre d'impressions, du nombre d'images de personnes inclues dans l'image photographique à l'image photographique, lorsque l'image photographique est une image photographique de personnes comprenant une ou plusieurs images de personnes, et l'association de zéro, en tant que nombre d'impressions, à l'image photographique, lorsque l'image photographique est une image photographique panoramique ne comprenant aucune image de personnes ;
d'une étape de détermination (S106) permettant de déterminer si, parmi la pluralité d'images photographiques, il existe une image photographique de personnes comprenant une ou plusieurs images de personnes ;
d'une étape de demande (S108) permettant de demander à un utilisateur si l'on doit ajouter le nombre de photographes au nombre d'impressions associé à chaque image photographique, lorsqu'il existe une image photographique de personnes ; et
d'une étape d'adjonction (S109) permettant d'établir un nombre d'adjonction obtenu en ajoutant le nombre de photographes au nombre d'impressions pour chaque image photographique, en tant que nombre d'impressions pour chaque image photographique, lors de la réception, de l'utilisateur, d'une réponse d'après laquelle le nombre de photographes doit être ajouté au nombre d'impressions
**caractérisé en ce que**
lorsqu'il y a une image photographique de personnes, l'étape de demande affiche un écran d'adjonction du nombre de photographes, sur lequel sont affichées des vignettes correspondant aux images photographiques, le nombre d'impressions associé à chaque image photographique, un message demandant si l'on souhaite ajouter le nombre de photographes au nombre d'impressions, une touche OK, et une touche d'annulation, et demande à l'utilisateur s'il souhaite ajouter le nombre de photographes au nombre d'impressions relatif à chaque image photographique,
lorsque l'on sélectionne la touche OK sur l'écran d'adjonction du nombre de photographes, l'étape de réglage définissant le nombre d'adjonction obtenu en ajoutant le nombre de photographes au nombre d'impressions relatif à chaque image photographique, en tant que nombre d'impressions pour chaque image photographique, et, lorsque l'on sélectionne la touche d'annulation sur l'écran d'adjonction du nombre du photographes, l'étape de réglage établit le nombre d'impressions correspondant à chaque image photographique, et
lorsque toutes les images de la pluralité d'images photographiques sont des images photographiques panoramiques, l'étape de réglage (S107) attribue « un » au nombre d'impressions relatif à chacune des images photographiques.

9. Support de stockage lisible par ordinateur dans lequel est stocké un programme déterminant l'exécution, par un appareil de formation d'images reconnaissant une image de personne dans une image photographique et établissant le nombre de personnes reconnues comme nombre d'impressions pour l'image photographique,
d'une étape d'association (S104) comportant, après la lecture d'une pluralité d'images photographiques, la détermination, à l'aide de la détection faciale, pour chacune de la pluralité d'images photographiques, de l'inclusion, ou non, d'une ou plusieurs personnes dans l'image photographique, l'association, aux fins du nombre d'impressions, du nombre d'images de personnes inclues dans l'image photographique à l'image photographique, lorsque l'image photographique est une image photographique de personnes comprenant une ou plusieurs images de personnes, et l'association de zéro, en tant que nombre d'impressions, à l'image photographique, lorsque l'image photographique est une image photographique panoramique ne comprenant aucune image de personnes ;
d'une étape de détermination (S106) permettant de déterminer si, parmi la pluralité d'images photographiques, il existe une image photographique de personnes comprenant une ou plusieurs images de personnes ;
une étape de demande (S108) permettant de demander à un utilisateur si l'on doit ajouter le nombre de photographes au nombre d'impressions associé à chaque image photographique, lorsqu'il existe une image photographique de personnes ; et
une étape d'adjonction (S109) permettant d'établir un nombre d'adjonction obtenu en ajoutant le nombre de photographes au nombre d'impressions pour chaque image photographique, en tant que nombre d'impressions pour chaque image photographique, lors de la réception, de l'utilisateur, d'une réponse d'après laquelle le nombre de photographes doit être ajouté au nombre d'impressions **caractérisé en ce que**
lorsqu'il y a une image photographique de personnes, l'étape de demande affiche un écran d'adjonction du nombre de photographes, sur lequel sont affichées des vignettes correspondant aux images photographiques, le nombre d'impressions associé à chaque image photographique, un message demandant si l'on souhaite ajouter le nombre de photographes au nombre d'impressions, une touche OK, et une touche d'annulation, et demande à l'utilisateur s'il souhaite ajouter le nombre de photographes au nombre d'impressions associé à chaque image photographique,
lorsque l'on sélectionne la touche OK sur l'écran d'adjonction du nombre de photographes, l'étape de réglage définissant le nombre d'adjonction obtenu en ajoutant le nombre de photographes au nombre d'impressions relatif à chaque image photographique, en tant que nombre d'impressions pour chaque image photographique, et, lorsque l'on sélectionne la touche d'annulation sur l'écran d'adjonction du nombre du photographes, l'étape de réglage établit le nombre d'impressions correspondant à chaque image photographique, et
lorsque toutes les images de la pluralité d'images photographiques sont des images photographiques panoramiques, l'étape de réglage (S107) attribue « un » au nombre d'impressions relatif à chacune des images photographiques.
